# EUROPEAN PATENT SPECIFICATION

(11) **EP 2 891 749 B1**
(45) Date of publication and mention of the grant of the patent: **20.12.2017**
(21) Application number: 13787794.0
(22) Date of filing: 04.05.2013
(51) Int. Cl.: E01H 1/12, A01K 1/01, A01K 27/00

(54) **DOG EXCREMENT COLLECTOR**
HUNDEEXKREMENTESAMMLER
RAMASSEUR D'EXCRÉMENTS CANINS

(30) Priority: 07.05.2012 ES 201230492
(43) Date of publication of application: 08.07.2015
(73) Proprietor: Hervas Pedraza, Mario, 13005 Ciudad Real (ES); Gómez Ruiz, José, 13005 Ciudad Real (ES); Alcaide Mota, Miguel Ángel, 13005 Ciudad Real (ES); Sánchez Torres, Francisco José, 13005 Ciudad Real (ES); Sánchez Nieto, Miguel, 13005 Ciudad Real (ES)
(72) Inventor: Hervas Pedraza, Mario, 13005 Ciudad Real (ES); Gómez Ruiz, José, 13005 Ciudad Real (ES); Alcaide Mota, Miguel Ángel, 13005 Ciudad Real (ES); Sánchez Torres, Francisco José, 13005 Ciudad Real (ES); Sánchez Nieto, Miguel, 13005 Ciudad Real (ES)
(74) Representative: Gil-Vega, Victor
(86) International application number: PCT/ES2013/070278
(87) International publication number: WO 2013/167776

(56) References cited:
- EP-A1- 2 182 119
- EP-A2- 1 892 334
- WO-A1-2004/077939
- ES-A1- 2 336 414
- ES-A1- 2 336 414
- ES-A6- 2 032 157
- ES-U- 1 033 181
- US-A- 3 328 066
- US-A- 5 570 919
- US-A1- 2004 135 386

## Description

### OBJECT OF THE INVENTION

This invention, as it is indicated, refers to a mechanical device designed for the collection of canine excrement.

The object of this invention is to provide a solution hitherto unknown to several drawbacks that will be discussed below, primarily, it is intended to achieve an end result that allows a more agile, quick and hygienic collections of excrements.

The device in question provides essential features of novelty and notable advantages over known means used for the same purposes in the prior art.

At present, there are many homes with pets, and without a doubt, the favorite pets are the dogs. To have them brings with it some responsibilities such as their care and maintenance of the hygienic conditions, for both, their own wellbeing and respect for others. In this regard, a major problem has always been the collection of canine excrement. The traditional way of collection is manual, through which, the owner collects the excrement from the ground aided by a bag in which the hand is sheathed to prevent direct contact. This system has a number of well known disadvantages such as the need for the person to descend to ground level to pick up the excrements, which may produce discomfort in the back, legs, arms, etc., especially in individuals with back injuries or elderly. This operation also raises certain qualms in many owners given that the bags, usually of a very thin plastic, allow perceiving the tact and the texture of the excrement, resulting unpleasant. Nor should we forget that the municipal health and hygiene regulations are becoming increasingly demanding regarding the issue at stake, coming to impose significant sanctions on those who violate their obligations to properly collect canine waste.

The device that the invention proposes fully and satisfactorily solves the aforementioned problems by providing a number of advantageous and novel features, and without any loss of its benefits in other aspects.

The proposed invention aims to provide an economic, ecological, practical, simple and easy to use solution, whose effect would be a more comfortable and healthy collection, thus avoiding unpleasant actions and facilitating the work of animal owners, helping both to meet the municipal guidelines, without this having any negative, economic, health, or any other type of effect on the user.

This invention has its field of application in the sector of devices intended to be used with animals, and more specifically in the canine excrement pickers.

### BACKGROUND OF THE INVENTION

In the state of the art we found some documents related to the invention in question, although none of them provides the same advantageous features nor effectively resolves the existing shortcomings.

Thus, in the document ES 1047944 U we found a canine excrement collector, that being specially designed for the collection of these excrements before they reach the ground, during a bowel movement of the animal, it is characterized by being formed from a mast that by one of its ends, it is rounded off in a ring fitted with means for fixing the mouth of a collection bag for excrements, the length of the said mast being such that in an upright situation for the user of the scooper, he can place the ring with the collecting bag under the hindquarters of the animal.

The disadvantage presented by this invention is that it is not as convenient to use as the proposed invention, since the latter has a more advanced, yet simple system, both in the collection of objects as in the control from the handle.

Furthermore, in the document ES 1062044 U , an extensible strap is provided with an incorporated excrement collector of the type that comprises a casing with a handle; there is a drum on the inside of the casing for collecting and dispensing of a strap through a frontal opening, this strap having in its free end a hook or other means of attachment to the collar of the dog, characterized in that the casing has means for fixing a tubular body of the excrement collector, this tubular body presenting a flexible string or the like housed inside, finding one end of the flexible string emerging from the orifice of a terminal of the front end of the tubular body, this previous end of the flexible string being fixed to a point of the outside of the above mentioned terminal for the formation of a loop by the tension of the flexible string itself, an inverted bag being arranged in this loop, while the other end of the said flexible string is emerging from the opposite end of the tubular body and related to a handle on the end of the telescopic sections, these telescopic sections being housed within the tubular body, the flexible string being operationally suitable for the strangulation of the bag, so that by stretching the handle of the free end of the flexible string, the mouth of the bag is closed bound over the excrement, picking it up in its inside.

This invention has the disadvantage of leaving many doubts as to the effectiveness of the collection system.

In turn, in the document ES 1 073 603 U a set of elements is claimed for the collection of canine excrement, constituted on the basis of a telescopic mast equipped at its upper end with a handle or grip, while at its opposite end it is attached jointly to a receptacle, characterized because the above mentioned container is formed from a pair of rectangular pipe bowls opposing each other in the form of a receiving mouth, hinged at one of its ends by a horizontal axis.

This invention provides a less efficient system than that proposed by not having catch pins or other incorporated system that actually facilitates the collection.

The ES2336414 discloses a device to pick objects of the type comprising a handle with a handle and a remote user at a proximal end of the handle and capture device at a distal end of the handle, characterized in that the capture device comprises a plurality of collet fingers ready circumferentially around the axial axis of the handle, each finger gripper hinged to the handle rotatable about an axis perpendicular to the axial axis of the handle being, with each finger clamp a rod connected to a pin capable of moving along the axial axis of the handle, said bolt actuatable from user control, such that movement of the bolt causes the opening or closing of the clamp by rotating the collet fingers around said perpendicular axes.

Thus we see that so far there was no known collector that for its novel features solves the above mentioned drawbacks, both in terms of the documents cited as to other inventions or traditional collectors we find in the state of the art.

Taking into consideration the above mentioned cases and having analyzed the conjugated arguments, with the invention that is proposed in this document, it gives rise to a final result in which significant differentiating features are provided before the current state of the art, and where a number of developments are given in the already known elements with their corresponding advantages.

In particular:
- A device that allows the collection of droppings without any contact with the hands is achieved.
- Full control of the process is achieved from the handle.
- The catch pins enable a quick and effective use of the device.
- It is a mechanical device that does not require electric power or the use of any consumables.
- It is a simple and inexpensive product.
- Easy to carry.
- It is easy and convenient to use.

### DESCRIPTION OF THE INVENTION

Thus, the present invention is constituted from the following elements:

A telescopic mast with handle provided at its upper end of a leash. In the mentioned upper end there is also a trigger that is internally attached to a retractable pulley, and this in turn to a cord whose free end extends longitudinally inside the mast, passing through a second pulley connected to a floating hexagonal piece, and reaching a fixed hexagonal piece located at the lower end of the mast. The ends of some six flexible or articulated catch pins are attached with a hinge to the floating hexagonal piece. The fixed hexagonal piece is tangentially provided of six platens, whose opposite ends are attached to the relatively central area of the catch pins, opening or guiding them, while each platen is attached by a cord to the bottom end of its corresponding catch pin. In the upper area of the mast is a retaining clip for bags and a cartridge bag dispenser with an outlet mouth and handle flaps; these bags being biodegradable and fully coated with absorbent paper, that is fixed appropriately and in an easily removable way. At the upper end of the mast there is a push button that acts on the pins unfolding them for their use.

In a different realization the catch pins are covered by a waterproof fabric.

Alternatively, the system presents a biodegradable bag with rubber in the middle part and closing by laces at the top, designed to cover the device almost completely.

The process for using the device is as follows: a) a bag is removed from the dispenser; b) the bag is placed on the catch pins of the telescopic mast in a folded position, introducing the bottom part of the mast into the bag, holding the top edges of the bag with the retaining clip, ensuring that the bag will not come off; c) to unfold the telescopic mast we activate the extension button, pressing this button will fully extend the three telescopic sections that make up the mast and the catch pins will be open with the bag covering it externally; d) with the device in this configuration we place the catch pins, on the excrement to be picked up; e) with the catch pins, on the excrement, we activate the action trigger getting them to close; e) the closing occurs when a cord that runs through the telescope is drawn taut, driving the floating hexagonal piece up, that with its rise, pulls the articulated catch pins, which, in turn, pull the platen cords of the arms, that as they go up make the articulated catch pins close; f) when closing the articulated catch pins, the droppings are collected leaving the content inside the bag; articulated catch pins g) at the same time that we take the bag of catch pins out, we release the trigger and we already have the excrement in the bag; h) to collect the mechanism we pull from a ring placed in the telescopic mast in order to collect the mechanism until it reaches its fully collected state.

### BRIEF DESCRIPTION OF THE DRAWINGS

For a better understanding of this descriptive report, it comes with a drawing that by way of a non-limiting example, describe a preferred embodiment of the invention:

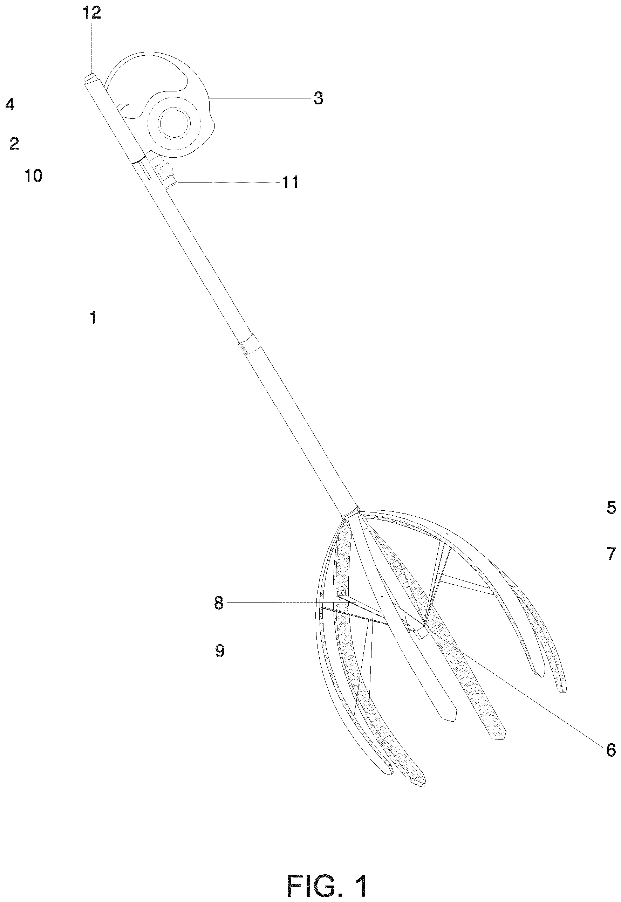

Figure 1. - Perspective of the invention.

In these figures we highlight the following numbered items:
1. Telescopic mast
2. Handle
3. Leash
4. Trigger
5. Floating hexagonal piece
6. Fixed hexagonal piece
7. Catch pins
8. Platen
9. Cords
10. Retaining clip
11. Cartridge bag dispenser
12. Push button

A preferred embodiment of the proposed invention is constituted from the following elements: a telescopic mast (1) with handle (2) provided at its upper end of a leash (3). In the mentioned upper end there is also a trigger (4) that is internally attached to a retractable pulley, and this in turn to a cord whose free end extends longitudinally inside the mast, passing through a second pulley connected to a floating hexagonal piece (5), and reaching a fixed hexagonal piece (6) located at the lower end of the mast. The ends of some six flexible or articulated catch pins (7) are attached with a hinge to the floating hexagonal piece. The fixed hexagonal piece is tangentially provided of six platens (8), whose opposite ends are attached to the relatively central area of the catch pins, opening or guiding them, while each platen is attached by a cord (9) to the bottom end of its corresponding catch pin. In the upper area of the mast is a retaining clip (10) for bags and a cartridge bag dispenser (11), with an outlet mouth and handle flaps; these bags being biodegradable and fully coated with absorbent paper, that is fixed appropriately and in an easily removable way. At the upper end of the mast there is a push button (12) that acts on the pins unfolding them for their use.

## Claims

1. Canine excrement collector, constituted on the basis of a telescopic mast (1) with a handle (2), provided at its upper end with a leash (3), wherein at the mentioned upper end there is also a trigger (4), **characterised in that** the trigger (4) is internally attached to a retractable pulley, and this in turn to a cord whose lower end extends longitudinally inside the mast (1), passing through a second pulley connected to a floating hexagonal piece (5), and reaching a fixed hexagonal piece (6) located at the lower end of the mast (1), wherein the ends of some six flexible or articulated catch pins (7) are attached with a hinge to the floating hexagonal piece (5), while the fixed hexagonal piece (6) is tangentially provided of six platens (8), whose opposite ends are attached to the relatively central area of the catch pins (7), opening or guiding them, while each platen (8) is attached by a cord (9) to the bottom end of its corresponding catch pin.

2. Canine excrement collector, according to claim 1, characterized because in the upper area of the mast (1) is a retaining clip (10) for bags and a cartridge bag dispenser (11) with an outlet mouth and handle flaps; these bags being biodegradable and fully coated with absorbent paper.

3. Canine excrement collector, according to claims 1 to 2, characterized because in the upper area of the mast (1) there is a push button (12) that acts on the catch pins (7) unfolding them for their use.

4. Canine excrement collector, according to claims 1 to 3 characterized because the catch pins (7) are covered by a waterproof fabric.

5. Canine excrement collector, according to claims 1 to 4, characterized because presents a biodegradable bag with rubber in the middle part and closing by laces at the top, designed to cover the device almost completely.

## Patentansprüche

1. Sammler für Hundeexkremente basierend auf einem Teleskopstiel (1) mit einem Griff (2) an dessen oberen Ende mit einer Leine (3), wobei am erwähnten oberen Ende gleichzeitig auch ein Drücker (4) vorgesehen ist, **gekennzeichnet dadurch, dass** der Drücker (4) innen mit einer einziehbaren Seilrolle verbunden ist und diese ihrerseits mit einem Seil, dessen unteres Ende sich längst im Inneren des Stiels (1) erstreckt und über eine zweite Seilrolle geführt wird, die mit einem schwebenden hexagonalen Teil (5) verbunden ist und bis zu einem hexagonalen Teil (6) reicht, das am unteren Ende des Stiels (1) angebracht ist, wobei die Enden von etwa sechs flexiblen oder angelenkte Mitnehmerstiften (7) mit dem hexagonalen, schwebenden Teil (5) über ein Scharnier verbunden sind, während das festliegende hexagonale Teil (6) tangential mit sechs Platten (8) versehen ist, deren gegenüberliegenden Enden mit dem relativ zentralen Bereich der Mitnehmerstift (7) verbunden sind, wodurch dieselben geöffnet oder geführt werden, während jede Platte (8) mittels eines Seiles (9) mit dem unteren Ende eines jeden entsprechenden Mitnehmerstiftes verbunden ist.

2. Sammler für Hundeexkremente übereinstimmend mit Anspruch 1, **dadurch gekennzeichnet, dass** der obere Bereich des Stieles (1) eine Halteklammer (10) ist für Tüten oder eine Tütenspenderkassette (11) mit einer Entnahrrievffnung und Grifflappen, wobei diese Tüten biologisch abbaubar und komplett mit Absorptionspapier beschichtet sind.

3. Sammler für Hundeexkremente gemäss Anspruch 1 bis 2, **dadurch gekennzeichnet, dass** im oberen Bereich des Stiels (1) ein Druckknopf (12) vorgesehen ist, der auf die Mitnehmerstift (7) einwirkt und dieselben für den Gebrauch aufklappen.

4. Sammler für Hundeexkremente gemäss Anspruch 1 bis 3 **dadurch gekennzeichnet, dass** die Mitnehmerstifte (7) mit einem wasserdichten Gewebe bedeckt sind.

5. Sammler für Hundeexkremente gemäss Anspruch 1 bis 4, **dadurch gekennzeichnet, dass** er mit einer biologisch abbaubaren Tüte mit Gummi im mittleren Teil und Verschlussiaschen am oberen Ende versehen ist, so entworfen, dass die Vorrichtung beinahe komplett bedeckt wird.

## Revendications

1. Dispositif de ramassage d'excrément canin constitué sur la base d'un mât télescopique (1) avec une poignée (2), le dispositif étant muni d'une laisse (3) à son extrémité supérieure et d'un élément déclencheur (4) en cette même l'extrémité supérieure, **caractérisé en ce que** l'élément déclencheur (4) est fixé à l'intérieur à une poulie rétractable, et celle-ci à son tour à une corde dont l'extrémité inférieure s'étend en longueur à l'intérieur du mât (1), passe à travers une seconde poulie raccordée à une pièce hexagonale flottante (5) et atteint un pièce hexagonale fixe (6) située à l'extrémité inférieure du mât (1) où les extrémités de six doigts de pincement flexibles ou articulés (7) sont fixés avec une charnière à la pièce hexagonale flottante (5), tandis que la pièce hexagonale fixe (6) est pourvue tangentiellement de six largets (8) dont les extrémités opposées sont fixées à une zone relativement centrale des doigts d'entraînement (7), les ouvrant ou les guidant tandis que chaque larget (8) est fixé par une corde (9) à l'extrémité inférieure de son propre doigt d'entraînement.

2. Dispositif de ramassage d'excrément canin selon la revendication 1 **caractérisé en ce que** la zone supérieure du mât (1) est un crochet de fixation (10) pour sacs et un dispensateur de sac à recharges (11) avec une bouche de sortie et des poignées découpés ; ces sacs étant biodégradables et entièrement revêtus de papier absorbant.

3. Dispositif de ramassage d'excrément canin selon les revendications 1 et 2 **caractérisé en ce que** dans la zone supérieure du mât (1), il y a bouton-poussoir (12) qui agit sur les doigts de pincement (7) en les déployant pour qu'ils soient prêts à l'emploi.

4. Dispositif de ramassage d'excrément canin selon les revendications 1 à 3 **caractérisé en ce que** les doigts de pincement (7) sont revêtus d'un tissu imperméable.

5. Dispositif de ramassage d'excrément canin selon les revendications 1 à 4 **caractérisé en ce qu'**il présente un sac biodégradable avec un élastique dans sa partie centrale et une fermeture avec des ficelles dans sa partie supérieure, conçus pour couvrir presque entièrement le dispositif.
